# EUROPEAN PATENT APPLICATION

(11) **EP 4 321 797 A1**
(43) Date of publication of application: **14.02.2024**
(21) Application number: 23189113.6
(22) Date of filing: 02.08.2023
(51) Int. Cl.: F21S 43/14, F21S 43/237, F21S 43/243, F21S 43/20, F21S 43/27, F21S 45/47

(54) **PROJECTION MODULE AND SIGNALLING AND PROJECTION ASSEMBLY**

(30) Priority: 08.08.2022 ES 202230735
(71) Applicant: Seat, S.A., 08760 Martorell (ES)
(72) Inventor: PIQUÉ COSCONERA, Xavier, 08760 MARTORELL (ES); MORÓN MORTE, Juan Carlos, 08760 MARTORELL (ES); CORULL MASSANA, Ernest, 08760 MARTORELL (ES)
(74) Representative: Ponti & Partners, S.L.P

(57) **Abstract**

A first aspect of the present invention relates to an image projection module (10) suitable for vehicle rear pilot lights, the rear pilot lights being of the type comprising therein a support (40) equipped with at least one housing (41) to support signalling lenses (5), the projection module (10) comprising an MLA assembly (1) suitable for executing an image projection function, and comprising an adapter (3) equipped with coupling means (31) configured to be coupled to one of the housings (41) of the support (40) of a rear pilot light and support means (32) configured to support the MLA assembly (1) in a position in which the direction of image projection is directed towards the ground, the external surface of the output lenses being oblique with respect to the plane defined by the coupling means (31). A second aspect of the present invention relates to a signalling and projection assembly (100) comprising said projection module (10).

## Description

### Technical field

A first aspect of the present invention relates to an image projection module suitable for rear pilot lights in vehicles. A second aspect of the present invention relates to a signalling and projection assembly comprising said projection module.

### State of the art

Current vehicles mount two rear pilot lights, each of which comprises a support with at least two housings for respective signalling lenses. By way of example, one of the pilot lights has two signalling lenses, one in each housing, to generate both the reverse gear and fog signalling function, while the other rear pilot light only has the signalling lens for the reverse gear function, having one of the housings free.

Moreover, image projection modules that allow carrying out a function of projection of information on the road, known as MLA (Micro Lens Array), are known on the market. This technology is centred on a lens assembly arranged in the shape of an array, wherein each of them is facing a mask with the element to be projected. This mask is obtained through a complex method of photolithography that is embedded in the same lens, which is obtained by a process of chrome plating and laser removal.

However, rear pilot lights that include both signalling lenses and image projection modules on the same support are not known in the state of the art.

### Description of the Invention

In a first aspect, the present invention relates to an image projection module for vehicle rear pilot lights, specifically, an image projection module suitable for being coupled to one of the housings of the supports intended to house the signalling lenses that are typical in rear pilot lights. Unlike the present projection module, said signalling lenses are suitable for directing light beams in a horizontal direction and executing a signalling function. In other words, the direction of the focal axis of this type of signalling lenses, which are not part of this projection module, is substantially parallel to the rolling surface of the vehicle, and its function consists of emitting light beams to be seen by a driver of a third vehicle or another person arranged at the rear portion of the vehicle, so that they are substantially parallel to the direction of advance of the vehicle.

However, unlike signalling lenses, this projection module is suitable for executing a function of image projection the direction of which is oblique to the horizontal plane or rolling surface of the vehicle, in other words, to the direction of projection of the signalling function, in general, directing the projection towards the road, so that third parties can see said projection on the ground.

This projection module has an MLA assembly of the type comprising:
- at least one input lens, which can be either an array of input microlenses or a single collimator, the function of which is to direct the light beams parallel and in a direction perpendicular to its rear light extraction surface,
- a mask, made up of an array of elements to be projected (in the event that the input lens is an array of input microlenses, each microlens is aligned with an element to be projected from said mask), and
- output lenses (specifically, an array of output microlenses aligned with one of the plurality of elements to be projected that form the array of elements of the mask to be projected and, as appropriate, with one of the input microlenses), the function of which is to project the image at the same point, in other words, that all the elements to be projected coincide on the surface to be projected, the direction of projection being orthogonal to the rear or external surface of the output lenses.

In order for the direction of projection of the image to be oblique to the horizontal, this projection module is characterised in that it comprises an adapter equipped with:
- coupling means configured to be coupled to one of the housings of the support of a real pilot light and
- support means configured to support the MLA assembly in a position of the projection module such that the direction of image projection is directed towards the ground, the external surface of the output lenses being oblique with respect to the plane defined by the coupling means and/or the housing of the support.

Due to the present adapter configuration, it is possible to locate the ground projection function in a rear pilot light intended to generate other functions (for example, the fog or reverse gear function), which can be generated at the same time as the projection of images when the support of the rear pilot light has more than one housing. In addition, the adapter allows the MLA assembly and the rest of the components that must accompany the projection module (PCB, light emitter/s, heat sink, etc.) to be identical for all the different vehicle models of a manufacturer, only changing the adapter, which simplifies logistics. In this way, only by varying the geometry of the adapter, it is possible to compensate for the variation in the position of the pilot light with respect to the ground of each of the different vehicle models of a manufacturer. Thus, both the support and the MLA assembly and the rest of the components can be identical, simplifying the design and construction of the projection modules for the range of different models by the same manufacturer.

In a preferred embodiment, the coupling means and/or the support means are configured to allow adjusting the projection or orientation direction of the MLA assembly, so that the same projection module can be used in different types of rear pilot lights and indistinctly place it in the orientation in which the projection of the images is directed towards the ground. For example, the coupling means may consist of a projection the shape of which is complementary to the housing of the rear pilot light, for example in a circular or polyhedral shape, being suited for coupling thereto in a nestable manner and which, by suitable forcing, allows coupling or uncoupling, while allowing the MLA assembly to be rotated in different positions.

In a possible embodiment, the adapter comprises a first prismatic area and a second prismatic area, which are supported by an angled support, in other words, where the first prismatic area and the second prismatic area are oblique to one another. In one embodiment, a first end of the adapter, corresponding to the first prismatic area, comprises the means for coupling to the support of the rear pilot light, said first prismatic area extending in a direction perpendicular to said support, and wherein the second end of the adapter, opposite to the first end and corresponding to the second prismatic area, comprises fastening means for fastening the output lenses, said second prismatic area extending in a direction perpendicular to the external surface of said output lenses. In this way, the angled area is arranged between the first prismatic area and the second prismatic area.

In a possible embodiment, the MLA assembly comprises a module PCB, which is equipped with at least one module light emitter (such as one or several LEDs) configured to emit light towards the at least one input lens. Thus, the entire MLA assembly and the electronics required to generate the projection function form an assembly, which is supported by the adapter inside the projection module.

According to said embodiment, preferably, the adapter is metallic and comprises a surface provided with sheets or vanes configured to dissipate heat coming from the module PCB. It does not require an energy sink typical of the projection module to be housed inside the adapter, but the closed structure of the adapter itself is used to generate the energy sink element on its walls.

A second aspect of the present invention consists of a signalling and projection assembly suitable for use in vehicle rear pilot lights, the signalling assembly being of the type comprising:
- a signalling lens that directs light beams to execute a signalling function,
- a support equipped with at least two housings, one of the housings housing said signalling lens,
- an assembly PCB that includes at least one first signalling light emitter arranged to emit light through said signalling lens and execute a signalling function.

This signalling and projection assembly is characterised in that it comprises, coupled to one of the housings, a projection module according to any of those described above.

Due to the present signalling and projection assembly, it is possible to generate both a signalling function and an image protection function inside the cavity of a single rear pilot light. In addition, its components, with the exception of the projection module adapter, can be identical for all the different vehicle models of a manufacturer, which simplifies logistics.

In a possible embodiment, the signalling and projection assembly additionally comprises a light guide arranged inside the adapter, as well as at least one second projection light emitter coupled to said assembly PCB and arranged to emit light towards said light guide, wherein the light guide is configured and arranged to receive the light beams emitted by the assembly light emitter and direct them towards the at least one input lens of the MLA assembly through the inside of the adapter. Therefore, the light guide transmits the light from the assembly PCB to the MLA assembly without light loss, both elements being spaced apart and inclined with respect to one another in secant planes.

In a first option, the signalling and projection assembly comprises an assembly heat sink configured to dissipate heat emitted by the second projection light emitter and/or the first signalling light emitter of the assembly PCB. Thus, the single heat sink is sized to be able to extract the heat generated by both the first and second light emitter assemblies.

In a second option, the MLA assembly of the projection module comprises, in addition to the assembly PCB, a module PCB equipped with at least one second projection light emitter configured to emit light towards the at least one input lens. In this second option, the projection module adapter can be metallic and comprise a surface provided with sheets or vanes configured to dissipate heat coming from said module PCB.

### Brief description of the drawings

The foregoing and other advantages and features will be better understood based on the following detailed description of several exemplary embodiments in reference to the attached drawings, which must be interpreted in an illustrative and non-limiting manner and in which:
- Figure 1 illustrates an exploded view of an exemplary embodiment of the present projection module.
- Figure 2 illustrates a first exemplary embodiment of the present signalling and projection assembly, which comprises the projection module of the embodiment of Figure 1 mounted on the support for signalling lenses.
- Figure 3 illustrates a second exemplary embodiment of the present signalling and projection assembly.
- Figure 4 illustrates a third exemplary embodiment of the present signalling and projection assembly.
- Figure 5 illustrates said third exemplary embodiment of Figure 4, without showing the projection module adapter.

### Detailed description of exemplary embodiments

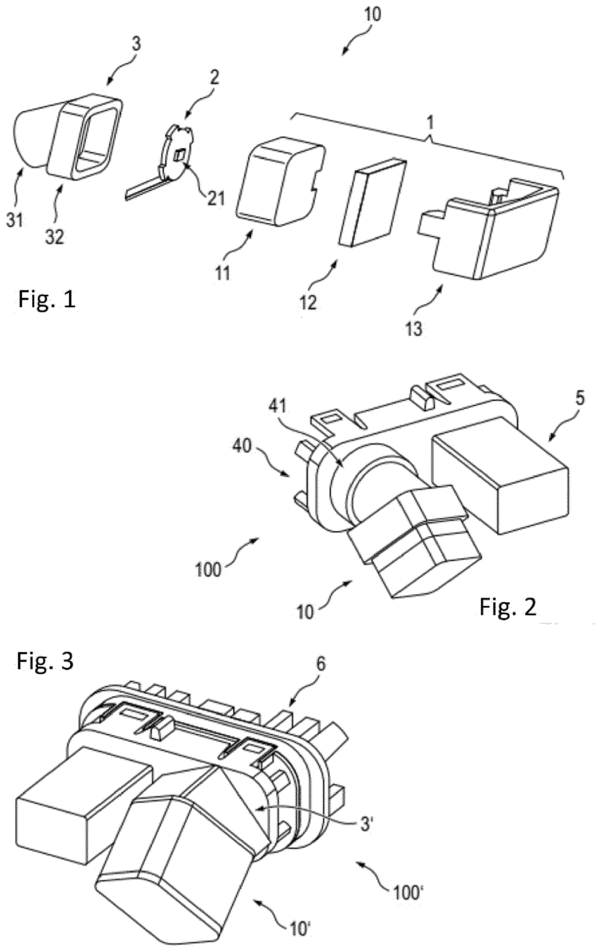

Figure 1 shows an exploded view of an exemplary embodiment of the present image projection module (10), which comprises:
- an MLA assembly (1) that includes:
   ∘ an input lens (11),
   ∘ a mask (12), and
   ∘ output lenses (13),
- an adapter (3) equipped with:
   ∘ coupling means (31) configured to be coupled to one of the housings (41) of a support (40) of a rear pilot light, and
   ∘ support means (32) configured to support the MLA assembly (1) in a position in which the outer surface of the output lenses (13) is oblique with respect to the plane in which the coupling means (31) are located, such that the direction of image projection can be directed towards the ground.

This embodiment of the projection module (10) also comprises a module PCB (2) that includes a module light emitter (21) configured to emit light towards the input lens (11). As will be seen in subsequent embodiments, this module PCB (2) can be excluded when the signalling and projection assembly (100") to which the projection module (1") is coupled already has an assembly PCB with at least one second projection light emitter intended to emit light towards the input lens (11).

Figure 2 shows a first embodiment of the present signalling and projection assembly (100), which comprises:
- a signalling lens (5) for directing light beams in a horizontal direction and executing a signalling function, the signalling lens (5) being schematically shown, wherein the signalling lens (5) is configured to extract the light beams in a direction substantially perpendicular to the plane defined by a support (40) of the signalling and projection assembly (100),
- a projection module (1) of the exemplary embodiment shown in Figure 1, arranged to execute a function of image projection towards the ground, in other words, in an oblique direction with respect to the plane defined by the support (40) of the signalling and projection assembly (100),
- the support (40) equipped with two housings (41), the coupling means (31) of the adapter (3) of the projection module (1) being housed in one of them, and the signalling lens (5) being housed in the other housing, and
- an assembly PCB, not shown in the figure, which includes a first signalling light emitter arranged to emit light through the signalling lens (5) and execute the signalling function.

As can be seen, the adapter (3) defines two prismatic areas differentiated from one another, separated by an angled area. A first prismatic area, which comprises a circular base, extends according to a direction substantially perpendicular to the plane defined by the support (40). A second prismatic area, which comprises a square or rectangular base, extends in an oblique direction with respect to the plane defined by the support (40). As can be seen, a first end of the adapter (3), corresponding to a first prismatic area, comprises the coupling means (31), consisting of a circular-shaped projection and configured so that said first prismatic area extends in a direction perpendicular to the plane defined by said support (40), while a second end of the adapter (3), opposite to the first end and corresponding to the second prismatic area, comprises the fastening means (32) for fastening the output lenses (13), which are configured so that said second prismatic area extends in a direction perpendicular to the external surface of said output lenses (13) and oblique with respect to the plane defined by said support (40).

Figure 3 shows a second embodiment of the signalling and projection assembly (100'), which comprises a projection module (10') the adapter (3) of which is metallic and comprises a surface provided with sheets or vanes configured to dissipate heat coming from the module PCB (2), in other words, from the at least one second projection light emitter. In turn, it includes an assembly heat sink (6), suitable for dissipating heat emitted by the assembly PCB, in other words, from the at least one first signalling light module. It is observed that the adapter (3) is not completely metallic. Only the portion corresponding to the first prismatic area comprises said sheets or vanes configured to dissipate heat. The second prismatic area does not execute said heat sink function, and may be made of plastic material. Both prismatic areas comprise a secant cutting plane between them, so that oblique positioning of the MLA assembly (1) is allowed. In addition, both prismatic areas are connected to one another, for example by means of bolted connections.

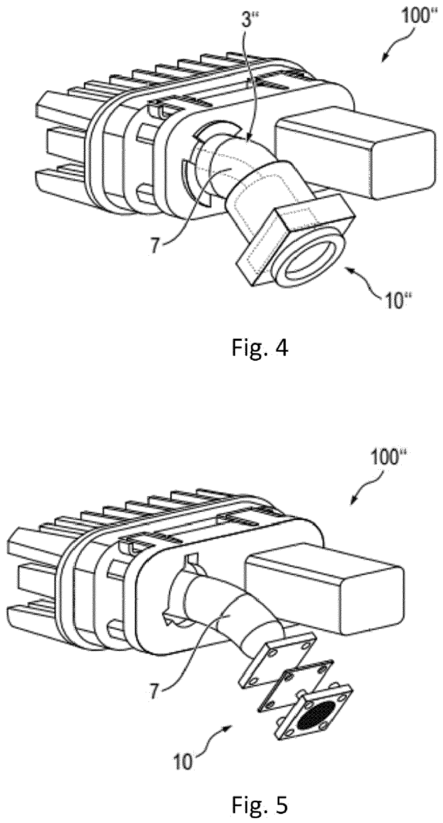

Figure 4 illustrates a third embodiment of the signalling and projection assembly (100") which, instead of comprising a projection module (1) with a module PCB (2), comprises a single assembly PCB, which has both the at least one first signalling light emitter and the at least one second projection light emitter. In order to transmit light from the at least one second projection light emitter to the at least one input lens (11) of the MLA assembly (1), both components being spaced apart and inclined between one another, there is a light guide (7) arranged inside the adapter (3") and with its same angled shape. The light guide (7) is configured and arranged to receive the light beams emitted by the at least one second projection light emitter and direct them through the inside of the adapter (3") towards the at least one input lens (11) of the protection module (10"), which is located in the second prismatic area of the adapter (3").

According to one embodiment, the coupling means (31) between the respective housing (41) and the adapter (3") comprise a bayonet-type fixing, which facilitates the installation and mounting of the adapter (3") on the support (40).

Figure 5 shows said third embodiment of the signalling and projection assembly (100"), hiding the adapter (3") and showing the MLA assembly (1) exploded. Thus, the angled geometry of the light guide (7) can be observed in greater detail, which replicates the inclinations of the first prismatic area and the second prismatic area of the adapter (3"), in order to run through its inside in parallel, transmitting the light from at least one projection light emitter to the input lens (11) of the MLA assembly (1).

## Claims

1. An image projection module (10) suitable for vehicle rear pilot lights, the rear pilot lights being of the type comprising therein a support (40) equipped with at least one housing (41) to support signalling lenses (5) of the type that are suitable for executing a signalling function, the projection module (10) comprising an MLA assembly (1) suitable for executing an image projection function, the MLA assembly (1) being of the type comprising at least one input lens (11), a mask (12) and output lenses (13), wherein the image projection direction of the MLA assembly (1) is orthogonal to the external surface of the output lenses (13), the projection module (10) being **characterised in that** it comprises an adapter (3) equipped with:
- coupling means (31) configured to be coupled to one of the housings (41) of the support (40) of a rear pilot light, and
- support means (32) configured to support the MLA assembly (1) in a position of the projection module (10) such that the direction of image projection is directed towards the ground, the external surface of the output lenses (13) being oblique with respect to the plane defined by the coupling means (31).

2. The projection module (10) according to claim 1, wherein the coupling means (31) and/or the support means (32) are configured to allow adjusting the projection direction of the MLA assembly (1).

3. The projection module (10) according to any of the preceding claims, wherein the adapter (3) comprises a first prismatic area and a second prismatic area, wherein the first prismatic area and the second prismatic area are oblique to one another.

4. The projection module (10) according to claim 3, wherein a first end of the adapter (3), corresponding to the first prismatic area, comprises the coupling means (31) for coupling to the support (40), which are configured so that said first prismatic area extends in a direction perpendicular to said support (40), and wherein the second end of the adapter (3), opposite to the first end and corresponding to the second prismatic area, comprises the fastening means (32) for fastening the output lenses (13), which are configured so that said second prismatic area extends in a direction perpendicular to the external surface of said output lenses (13).

5. The projection module (10) according to any of the claims, wherein the MLA assembly (1) comprises a module PCB (2) equipped with at least one module light emitter (21) configured to emit light towards the at least one input lens (11).

6. The projection module (10) according to claim 5, wherein the adapter (3) is metallic and comprises a surface provided with sheets or vanes configured to dissipate heat from the module PCB (2).

7. A signalling and projection assembly (100) for vehicle rear pilot lights, which comprises:
- a signalling lens (5) to direct light beams horizontally and execute a signalling function,
- a support (40) equipped with at least two housings (41), one of the housings (41) being configured to support said signalling lens (5) inside a rear pilot light,
- an assembly PCB that includes at least one first signalling light emitter arranged to emit light through the signalling lens (5),
the signalling and projection assembly (100) being **characterised in that** it comprises, coupled in one of the housings (41), a projection module (10) as described in any of claims 1 to 6.

8. The signalling and projection assembly (100) according to claim 7, which additionally comprises a light guide (7) arranged inside the adapter (3'), as well as at least one second projection light emitter coupled to said assembly PCB and arranged to emit light towards said light guide (7), wherein the light guide (7) is configured and arranged to receive the light beams emitted by the at least one second projection light emitter and direct them towards the at least one input lens of the MLA assembly (1) through the inside of the adapter (3').

9. The signalling and projection assembly (100) according to any of claims 7 or 8, which comprises an assembly heat sink (6) configured to dissipate heat emitted by the at least one second projection light emitter and the at least one first signalling light emitter of the assembly PCB.

10. The signalling and projection assembly (100) according to claim 7, wherein the MLA assembly (1) of the projection module (10) comprises, in addition to the assembly PCB, a module PCB (2) equipped with at least one module light emitter (21) configured to emit light towards the at least one input lens (11).

11. The signalling and projection assembly (100) according to claim 10, wherein the adapter (3) of the projection module (10) is metallic and comprises a surface provided with sheets or vanes configured to dissipate heat from the module PCB (2).
